## Europäisches Patentamt

## European Patent Office

## Office européen des brevets

(19)

(11) Veröffentlichungsnummer : **0 379 682 B1**

(12)

# EUROPÄISCHE PATENTSCHRIFT

(45) Veröffentlichungstag der Patentschrift :
**27.05.92 Patentblatt 92/22**

(51) Int. Cl.⁵ : **G01B 13/03,** G01B 21/04

(21) Anmeldenummer : **89122257.2**

(22) Anmeldetag : **02.12.89**

(54) **Tastkopf vom schaltenden Typ.**

(30) Priorität : **15.12.88 DE 3842151**

(43) Veröffentlichungstag der Anmeldung :
**01.08.90 Patentblatt 90/31**

(45) Bekanntmachung des Hinweises auf die
Patenterteilung :
**27.05.92 Patentblatt 92/22**

(84) Benannte Vertragsstaaten :
**CH DE FR GB IT LI**

(56) Entgegenhaltungen :
**DD-A- 249 573**
**DE-A- 3 420 139**
**US-A- 4 153 998**

(73) Patentinhaber : **Firma Carl Zeiss**
**W-7920 Heidenheim (Brenz) (DE)**
(84) **CH DE FR IT LI**

Patentinhaber : **CARL ZEISS-STIFTUNG**
**HANDELND ALS CARL ZEISS**
**W-7920 Heidenheim (Brenz) (DE)**
(84) **GB**

(72) Erfinder : **Ähnelt, Hans-Peter**
**Pulfrichstrasse 16**
**W-7082 Oberkochen (DE)**
Erfinder : **Enderle, Eckard**
**Hutsteinweg 6**
**W-7080 Aalen-Dewangen (DE)**
Erfinder : **Wirth, Michael**
**Egerlandstrasse 1**
**W-7080 Aalen (DE)**

Jouve, 18, rue Saint-Denis, 75001 PARIS

## Beschreibung

Die Erfindung bezieht sich auf einen Tastkopf vom schaltenden Typ mit einem Vorspannorgan, das den beweglichen, den auslenkbaren Taststift tragenden Teil des Tastkopfes nachgiebig und mit einstellbarer Kraft in einem die Nullage des Taststifts hochgenau reproduzierenden Lager hält.

Die bisher an Koordinatenmeßgeräten verwendeten mechanischen Tastköpfe lassen sich prinzipiell in zwei Kategorien einteilen, in Tastköpfe vom sogenannten messenden Typ, die ein der Auslenkung ihres Taststifts proportionales, analoges Signal liefern, und Tastköpfe vom sogenannten schaltenden Typ, die allein im Moment der Antastung ein impulsförmiges Signal liefern nämlich dann, wenn der Taststift von dem seine Nullage hochgenau reproduzierenden Lager im Zuge des Antastvorganges abhebt. Solche Tastköpfe sind beispielsweise in der US-PS 41 53 998 beschrieben.

Als Vorspannorgan, das den beweglichen, den auslenkbaren Taststift tragenden Teil des Tastkopfes in dieses Lager hineindrückt, werden im allgemeinen Druckfedern eingesetzt. Komfortablere Tastköpfe besitzen außerdem eine sogenannte Tariereinrichtung, über die sich die Kraft dieser Druckfeder verstellen läßt. Hierdurch kann die Antastkraft vorgewählt werden, die der Taststift auf das zu vermessende Werkstück ausübt, und die Antastkraft auch dann konstant gehalten werden, wenn Taststifte mit unterschiedlichem Gewicht in den Tastkopf eingewechselt werden.

Die Vorspannung des Taststifts mittels einer Druckfeder ist jedoch in mehrerer Hinsicht nachteilig. Zum einen erzeugt die Druckfeder während der Hubbewegung sowohl im Zuge des Antastvorganges wie auch beim Tarieren Torsionskräfte, die den Taststift so verdrehen können, daß er in sein Lager nicht wieder zurückkehrt. Letzteres muß durch zusätzliche konstuktive Maßnahmen verhindert werden. Außerdem nimmt die Auslenkkraft entsprechend der Steifigkeit der Druckfeder während des Auslenkvorganges zu. Dies birgt die Gefahr, daß der relativ dünne Taststift aus Hartmetall bzw. Keramikmaterial bricht.

Schließlich neigen lange Druckfedern, wie sie für große Auslenkwege benötigt werden, zum Knicken. Die hierbei entstehenden Querkräfte verschlechtern die Genauigkeit, mit der die Nullage des Taststiftes beim Zurückkehren in das Lager reproduziert wird.

Aus der DE-OS 34 20 139 ist ein schaltender Tastkopf bekannt, dessen Gehäuseinneres durch Druckluft beaufschlagt ist. Dieser Überdruck trägt auch zur Vorspannung des auf einem Ventilsitz aufliegenden Taststifts dieses Tastkopfes bei. Das eigentliche Vorspannorgan in dem bekannten Tastkopf ist jedoch nach wie vor eine Feder. Der Druck im Inneren des Tastkopfes ist nicht einstellbar und wird allein zur Erkennung des Antastvorganges benutzt.

In der DE-OS 25 35 249 ist ein Tastkopf vom messenden Typ beschrieben, dessen Taststift längs dreier orthogonaler Führungssysteme in allen drei Raumrichtungen linear verschiebbar ist. In diesem Tastkopf sind eine Vielzahl von Druckmittelzylindern vorhanden, die jeweils parallel zu den Führungen angeordnet sind und für eine konstante Antastkraft des Taststiftes sorgen. Abgesehen davon, daß es hier sich um einen Tastkopf anderen Typs handelt, läßt sich der Druck in den Druckmittelzylindern nicht verändern, so daß es nicht möglich ist, unterschiedliche Antastkräfte einzustellen oder den Tastkopf abhängig vom Gewicht des eingesetzten Taststiftes neu zu tarieren.

In der Koordinatenmeßtechnik geht die Tendenz nun dahin, die Geräte immer schneller und variabler zu machen, um eine Vielzahl verschiedener Meßaufgaben mit einem Gerät lösen zu können. Für den Tastkopf bedeutet dies, daß die Antastkraft, die der Taststift auf das Werkstück ausübt, während eines Meßvorganges möglichst schnell veränderbar sein soll. Außerdem soll die nach jedem der mehrfach während eines Meßvorganges durchgeführten Taststift-Wechselvorgänge nötige Neutarierung entsprechend dem Gewicht des eingesetzten Taststiftes möglichst schnell durchgeführt werden, damit keine Meßzeit verloren geht. Dies läßt sich mit einer Feder als Vorspannorgan, selbst wenn sie in ihrer Federkraft mit Hilfe eines Stellmotors automatisch einstellbar sein sollte, nicht mit der erforderlichen Geschwindigkeit erreichen.

Es ist daher die Aufgabe der vorliegenden Erfindung, einen Tastkopf zu schaffen, der die vorstehend genannten Nachteile weitgehend vermeidet.

Diese Aufgabe wird bei einem Tastkopf der eingangs genannten Art gemäß den Merkmalen im Kennzeichen des Anspruchs 1 dadurch gelöst, daß das Vorspannorgan ein pneumatischer Druckkolben ist und ein Regelventil vorgesehen ist, von dem der auf den Kolben wirkende Druck (P) veränderbar ist.

Durch die erfingungsgemäßen ist es möglich, die Haltekraft des Vorspannorgans sehr schnell auf unterschiedliche Werte einzustellen, so daß ohne Einbuße an Meßzeit unterschiedliche Antastkräfte für den Taststift eingestellt und verschieden schwere Tasterkombinationen tariert werden können. Die Verwendung eines pneumatischen Vorspannorganes in einem schaltenden Tastkopf bietet jedoch noch weitere Vorteile. So bleibt die Vorspannkraft auch während der Aulenkbewegung des Taststiftes konstant, wodurch die Gefahr eines Bruchs des Taststiftes vermieden ist. Außerdem ist der Bereich, in dem die Vorspannkraft gewählt werden kann, bei vorgegebener Baugröße des Tasters sehr viel größer als bei einer Druckfeder. Infolge der pneumatischen Einstellung der Vorspannkraft wird außerdem keine Verlustwärme erzeugt, wie dies beispielsweise bei motorgetriebenen oder elektromagnetisch angesteuerten Tariereinrichtungen der Fall ist. Letzteres ist in der Koordinatenmeßtechnik besonders wichtig, da jede Verlustwärme eine Materialausdehnung zur Folge hat, infolge der sich die kalibrierte Nullage des Taststifts verändert.

Das Regelventil für den Druckylinder ist zzweckmäßig an die Steuerung des Koordinatenmeßgerätes angeschlossen, an dessen Meßarm der Tastkopf befestigt ist. Dies bietet den Vorteil, daß mit Hilfe der Steuerung eine Vielzahl von Zusatzfunktionen im Tastkopf angesprochen werden können, die entweder die Meßgenauigkeit oder die Zuverlässigkeit der Funktion des Tastkopfes zusätzlich verbessern. So kann die Steuerung beispielsweise bei einem Ansprechen der in ihr enthaltenen Kollisionsschutzschaltung den Druck des Vorspannorgans im Tastkopf schnell vermindern, so daß der bewegliche Teil des Tastkopfes im Kollisionsfalle leicht nachgibt. Außerdem kann die Steuerung nach jedem Antastvorgang einen Druckstoß bzw. eine Druckschwingung über das Regelventil in dem Druckzylinder erzeugen. Hierdurch wird der Taststift bzw. dessen Träger in Vibrationen versetzt, wodurch die Lagerreibung überwunden wird und der Taststift deshalb mit höherer Genauigkeit in seine Nullage zurückfindet.

Es ist weiterhin vorteilhaft, wenn der Druckkolben als Kugel ausgebildet ist. Durch die Kugelform wird erreicht, daß der Druckkolben seitlichen Bewegungen des Taststiftsträgers im Zuge des Antastvorganges zwangsfrei folgen kann. Die Kugelform stellt in Verbindung mit der zwischen dem Druckkolben und der Wandung des Druckzylinders abströmenden Luft außerdem die Reibungsfreiheit der Lagerung des Kolbens in dem Druckzylinder sicher.

Schlließlich ist es zweckmäßig, wenn der bewegliche Teil des Tastkopfes an Zugfedern aufgehängt ist, die das Eigengewicht des beweglichen Teils kompensieren. Dann kann nämlich über die Kraft des Vorspannorganes die Antastkraft, die der Taststift auf das Werkstück ausübt, in weiten Grenzen zwischen dem Wert null und dem durch den maximalen Betriebsdruck sich ergebenden Wert frei eingestellt werden.

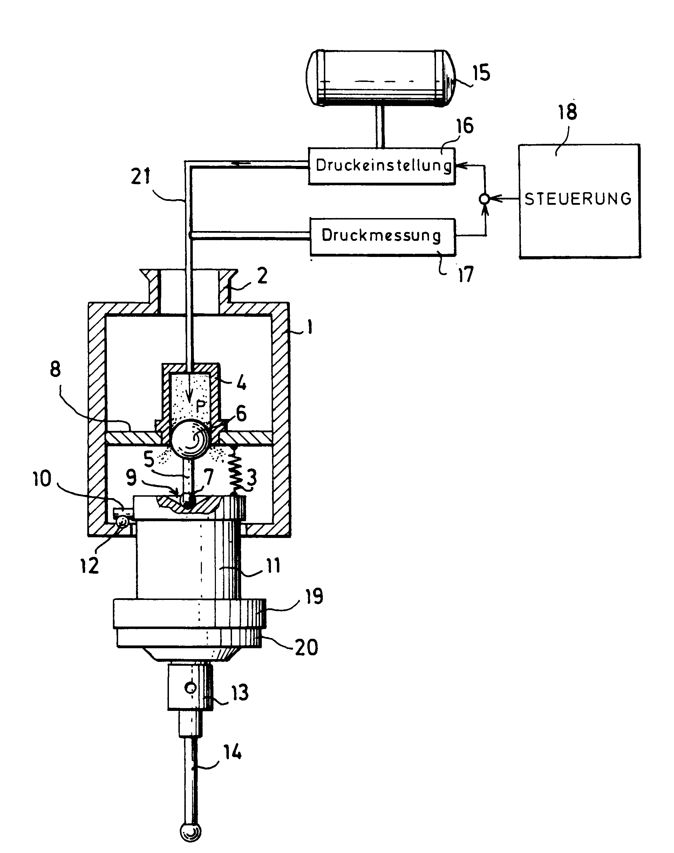

Nachfolgend ist die Erfindung anhand eines in der beigefügten Zeichnung, dargestellten Ausführungsbeispiels beschrieben.

Dort ist in einer vereinfachten Prinzipskizze ein Tastkopf vom schaltenden Typ dargestellt. Dieser Tastkopf besitzt ein zylindrisches Gehäuse (1), das an seinem stirnseitigen oberen Ende mit einer Aufnahme (2) versehen Meßarmist, mit der der Tastkopf am Meßarm einer hier nicht dargestellten Koordinatenmeßmaschine befestigt werden kann. An dem der Aufnahme (2) entgegengesetzten Ende trägt das Gehäuse (1) auf der Innenseite eines zylindrischen Bundes ein aus drei Kugelpaaren bestehendes Lager, auf dem der bewegliche Teil (11) des Tastkopfes selbstzentrierend aufliegt. In der gezeigten Darstellung ist nur eine, nämlich die Kugel (12) der drei Kugelpaare des Lagers zu sehen. In jeder der drei um 120° bezüglich der Längsachse des Tastkopfes versetzt angeordneten, aus den Kugelpaaren gebildeten Kerben liegt jeweils einer von drei radial vom Teil (11) abstehenden Zylinderkörpern (10). Diese, an sich bekannte Anordnung aus Kugelpaaren und Zylinderkörpern reproduziert die Nullage des mit (14) bezeichneten Taststifts des Tastkopfes mit hoher Genauigkeit.

Der Taststift (14) ist über eine Aufnahme (13) am unteren Ende des beweglichen Taststiftträgers befestigt. Zwischen der Aufnahme (13) und dem Taststiftträger (11) ist außerdem eine Wechselstelle (19,20) vorgesehen, über die der Taststift (14) gegen andere Taststifte oder gegen aus mehreren Taststiften bestehende, komplette Taststiftkombinationen automatisch ausgewechselt werden kann. Diese Wechselstelle besteht aus zwei mit (19) und (20) bezeichneten Tellern, zwischen denen ebenfalls wieder ein die Lage des Taststiftes nach dem Wechselvorgang hochgenau reproduzierendes Dreipunktlager angeordnet ist. Bezüglich der genauen Ausbildung der Wechselstelle wird auf die in dem US-Patent 4 637 119 der Anmelderin beschriebene Ausführungsform verwiesen.

Im Inneren des Gehäuses (1) ist außerdem ein Trägerteil (8) eingezogen, von dem aus drei Zugfedern zum beweglichen Taststiftträger (11) gespannt sind. In der gezeigten Darstellung ist nur eine der drei Federn, nämlich die Feder (3) zu sehen.

Die Kraft dieser Federn ist so bemessen, daß dann, wenn die Taststiftkombination mit dem höchstzulässigen Gewicht an den Wechselteller (19) eingewechselt ist, das Gewicht des gesamten beweglichen Teils etwas kleiner als die Federkraft ist und das Lager (10,12) gerade entlastet wird.

Am Trägerteil (8) ist außerdem zentrisch ein nach unten in Richtung auf den Taststift offener Druckzylinder (4) befestigt. In diesem Druckzylinder (4) befindet sich ein kugelförmiger Druckkolben (6), der über die daran befestigte Kolbenstange (5) und den ebenfalls kugelförmigen Kopf (7) der Kolbenstange in eine prismatische Kerbe (9) auf der Oberseite des beweglichen Taststiftträgers (11) drückt. Die gelenkige Anbindung des beweglichen Taststiftträgers (11) an das Vorspannorgan und die kugelförmige Ausbildung des Kolbens und des Kolbenstangenkopfes erlaubt alle beliebigen Dreh-, Kipp-, und Hubbewegungen, so daß der Druckkolben bei einem Ausrücken des Teils (11) aus seinem Lager im Zuge des Antastvorganges des Tastkopfes dieser Bewegung zwangsfrei folgen kann.

Das Innere des Druckzylinders (4) wird von einer Versorgungseinheit (15) und ein Druckregelventil (16) über die mit (21) bezeichnete Leitung mit Druckluft versorgt. Der sich im Zylinder (4) aufbauende Überdruck kann in geringem Maße zwischen dem kugelförmigen Kolben (6) und der Innenwand des Zylinders (4) abströmen. Hierdurch ist der Kolben (6) luftgelagert und somit reibungsfrei geführt.

Das Druckregelventil (16) ist mit einem Druckmesser (17) in einen Druckregelkreis eingebunden. Die Führungsgröße für die Druckregelung liefert die Steuerung (18) des Koordinatenmeßgerätes, an dem der Tastkopf befestigt ist. Auf diese Weise läßt sich der Druck im Inneren des Zylinders (4) kontinuierlich oder in mehreren Stufen auf unterschiedliche Werte so einstellen, daß die Vorspannung des Lagers (10,12) und damit die Antastkraft des Taststift (14) zwischen Null und einem vorgegebenen maximalen Wert variiert werden kann.

Die Steuerung (18) führt außerdem nach jedem Wechsel des Taststifts (14) einen Tariervorgang durch, bei dem durch eine entsprechende Druckerhöhunng bzw. Erniedrigung im Druckzylinder (4) die Gewichtsdifferenz zwischen verschiedenen Taststiften in der Weise kompensiert wird, daß die Kraft, mit der das bewegliche Teil (11) des Tastkopfes in seinem Lager (10,12) liegt, konstant bleibt.

Mit dem erfindungsgemäßen Tastkopf ist es weiterhin möglich, auch dann schnell zu messen, wenn Taststifte mit relativ großer Masse eingewechselt sind. Dies war bislang problematisch, weil die Massenträgheit des Taststiftes in den Beschleunigungs- und Abbremsphasen des Meßgerätes zu einem Ausheben des Taststiftes aus dem Lager des Tastkopfes führen und einen Antastvorgang vortäuschen konnte. In dem erfindungsgemäßen Tastkopf kann hingegen von der Steuerung des Koordinatenmeßgeräts zumindest während der Beschleunigungs- und Abbremsvorgänge, aber auch während des Verfahrens zwischen verschiedenen Positionen im Meßbereich, der Druck auf das Lager auf einen hohen Wert eingestellt werden, der sicherstellt, daß der Taststift in seinem Lager bleibt. Der Druck wird nur dann, wenn der Tastkopf mit in der Regel niedriger Antastgeschwindigkeit auf das zu vermessende Werkstück zu verfahren wird, auf den die Meßkraft bestimmenden, niedrigeren Wert eingestellt.

## Patentansprüche

1. Tastkopf vom schaltenden Typ mit einem Vorspannorgan (6), das den beweglichen, den auslenkbaren Taststift (14) tragenden Teil (11) des Tastkopfes nachgiebig und mit einstellbarer Kraft in einem die Nullage des Taststifts hochgenau reproduzierenden Lager (10,12) hält, dadurch gekennzeichnet, daß das Vorspannorgan ein pneumatischer Druckkolben (6) ist und ein Druckregelventil (16) vorhanden ist, mit dem der auf den Kolben wirkende Druck (P) veränderbar ist.

2. Tastkopf nach Anspruch 1, dadurch gekennzeichnet, daß der Druckkolben (6) gelenkig mit dem beweglichen Teil (11) des Tastkopfes verbunden ist.

3. Tastkopf nach Anspruch 1, dadurch gekennzeichnet, daß der Druckkolben (6) als Kugel ausgebildet ist.

4. Tastkopf nach Anspruch 1, dadurch gekennzeichnet, daß der bewegliche Teil (11) des Tastkopfes an Zugfedern (3) aufgehängt ist, die das Eigengewicht des beweglichen Teils (11) kompensieren.

5. Tastkopf nach Anspruch 1, dadurch gekennzeichnet,daß er an dem Meßarm eines Koordinatenmmeßgerätes befestigt ist und daß das Druckregelventil (16) an die Steuerung (18) des Koordinatenmeßgerätes angeschlossen ist.

6. Tastkopf nach Anspruch 5, dadurch gekennzeichnet, daß die Steuerung (18) eine Kollisionsschutzschaltung enthält, durch die im Kollisionsfalle der Druck (P) im Druckzylinder (4) schnell vermindert bar ist.

7. Tastkopf nach Anspruch 5, dadurch gekennzeichnet,daß durch die Steuerung (18) nach jedem Antastvorgang ein Druckstoß bzw. eine Druckschwingung über das Druckregelventil (16) in dem Druckzylinder (4) erzeug bar ist.

8. Tastkopf nach Anspruch 5, dadurch gekennzeichnet, daß durch die Steuerung (18) der Druck nach jedem Taststiftwechsel entsprechend dem Gewicht des eingewechselten Taststifts (13,14) neu einstell bar ist.

9. Tastkopf nach Anspruch 5, dadurch gekennzeichnet, daß durch die Steuerung (18) der Druck zumindest während Beschleunigungsund Abbremsvorgängen auf einen hohen Wert einstell und bar ist daß der Druck dann, wenn der Tastkopf mit Antastgeschwindigkeit auf das zu vermessende Werkstück zu verfahren wird, auf einen niedrigen Wert einstell bar ist.

## Claims

1. A probe head of the switching type having a pre-loading device (6) which vieldably holds the movable probe-pin (14) supporting part (11) of the probe head, and with adjustable force, in a bearing (10, 12) which reproduces in highly precise manner the null position of the probe pin, characterized by the fact that the loading device is a pneumatic-pressure piston (6) and that a pressure regulating valve (16) is provided by which to vary the pressure (P) acting on the piston.

2. A probe head according to claim 1, characterized by the fact that the pressure piston (6) is pivotally connected to the movable part (11) of the probe head.

3. A probe head according to claim 1, characterized by the fact that the pressure-piston (6) is developed as a ball.

4. A probe head according to claim 1, characterized by the fact that that movable part (11) of the probe head is suspended on tension springs (3) which compensate for the weight of the movable part (11) itself.

5. A probe head according to claim 1, characterized by the fact that the probe head is fastened to the measurement arm of the coordinate-measuring instrument and that the pressure regulating valve (16) is connected to the control system (18) of the coordinate-measuring instrument to which the probe head is fastened.

6. A probe head according to claim 5, characterized by the fact that the control system (18) contains an anti-collision circuit by which in the event of a collision, the pressure (P) in the pressure cylinder (4) is reduced rapidly.

7. A probe head according to claim 5, characterized by the fact that, after each contacting procedure, the control system (18) is operative upon the pressure regulating valve (16) to develop a pressure pulse or a pressure oscillation in the pressure-fluid cylinder (4).

8. A probe head according to claim 5, characterized by the fact that the control system (18) resets the pressure upon each change from one to a different probe pin in accordance with the weight of the newly inserted probe pin.

9. A probe head according to claim 5, characterized by the fact that, at least during acceleration and deceleration cycles the control system (18) sets the regulated pressure to a high value and then sets the regulated pressure to a low value when the probe head is to be moved with contacting speed into contact with a workpiece to be measured.

## Revendications

1. Palpeur de type par tout ou rien ou de type commutateur, possédant un organe de précontrainte (6) qui maintient la partie mobile (11) du palpeur, portant la tige de palpage (14) susceptible d'être déviée, de manière élastique et avec une force réglable dans un appui (10, 12) reproduisant avec une haute précision la position zéro de la tige de palpage, caractérisé en ce que l'organe de précontrainte est un piston de pression pneumatique (6) et qu'une vanne de réglage de pression (16) est présente, au moyen de laquelle la pression (P) agissant sur le piston peut être changée.

2. Palpeur selon la revendication 1, en ce que le piston de pression (6) est relié de façon articulée à la partie mobile (11) du palpeur.

3. Palpeur selon la revendication 1, caractérisé en ce que le piston de pression (6) est réalisé comme une sphère.

4. Palpeur selon la revendication 1, caractérisé en ce que la partie mobile (11) du palpeur est suspendue à des ressorts de traction (3) qui compensent le poids propre de la partie mobile (11).

5. Palpeur selon la revendication 1, caractérisé en ce qu'il est fixé au bras de mesure d'un appareil de mesure en coordonnées et que la vanne de réglage de pression (16) est raccordée à la commande (18) de l'appareil de mesure en coordonnées.

6. Palpeur selon la revendication 5, caractérisé en ce que la commande (18) contient un circuit de protection contre les collisions, par lequel la pression (P) dans le cylindre de pression (4) peut être réduite rapidement en cas de collision.

7. Palpeur selon la revendication 5, caractérisé en ce que la commande (18) est capable de produire, après chaque attouchement, par l'intermédiaire de la vanne de réglage de pression (16), un choc de pression ou une oscillation de pression dans le cylindre de pression (4).

8. Palpeur selon la revendication 5, caractérisé en ce que la pression est réajustable par la commande (18) après chaque changement de tige de palpage en fonction du poids de la tige de palpage (13, 14) qui vient d'être mise en place.

9. Palpeur selon la revendication 5, caractérisé en ce que la commande (18) est capable d'ajuster la pression à une valeur élevée, tout au moins pendant des accélérations et des freinages, et que la pression peut être ajustée à une valeur faible lorsque le palpeur est approché à la vitesse de palpage de la pièce à mesurer.